(19)

Europäisches
Patentamt

European
Patent Office

Office européen
des brevets

(11) **EP 4 123 257 B1**

(12) **EUROPEAN PATENT SPECIFICATION**

(45) Date of publication and mention
of the grant of the patent:
**09.10.2024   Bulletin 2024/41**

(51) International Patent Classification (IPC):
**G01B 9/02001** *(2022.01)*     **G01B 9/02015** *(2022.01)*
**G01B 9/02055** *(2022.01)*

(21) Application number: **21186651.2**

(22) Date of filing: **20.07.2021**

(52) Cooperative Patent Classification (CPC):
**G01B 9/02027; G01B 9/0201; G01B 9/02067;**
G01B 2290/55

(54) **PHASE TUNING AND PHASE STABILIZATION OF MULTIPLE INTERFEROMETERS**

PHASENABSTIMMUNG UND PHASENSTABILISIERUNG MEHRERER INTERFEROMETER

RÉGLAGE DE PHASE ET STABILISATION DE PHASE DE MULTIPLES INTERFÉROMÈTRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.01.2023   Bulletin 2023/04**

(73) Proprietor: **Fraunhofer-Gesellschaft zur
Förderung
der angewandten Forschung e.V.
80686 München (DE)**

(72) Inventors:
• **Marques Muniz, André Luiz**
  **07743 Jena (DE)**
• **González Martin del Ca, Luis Javier**
  **07747 Jena (DE)**
• **Tangarife Villamizar, Nicolas Eduardo**
  **07747 Jena (DE)**
• **Steinlechner, Fabian**
  **07745 Jena (DE)**

(74) Representative: **Louis Pöhlau Lohrentz
Patentanwälte
Merianstrasse 26
90409 Nürnberg (DE)**

(56) References cited:
**US-A1- 2014 320 856**

• **JOHANNES BURKART ET AL: "Absorption line
metrology by optical feedback
frequency-stabilized cavity ring-down
spectroscopy", APPLIED PHYSICS B, SPRINGER
BERLIN HEIDELBERG, BERLIN/HEIDELBERG,
vol. 119, no. 1, 7 January 2015 (2015-01-07), pages
97 - 109, XP035445839, ISSN: 0946-2171,
[retrieved on 20150107], DOI:
10.1007/S00340-014-5999-3**
• **HEINZEL G. ET AL: "Experimental Demonstration
of a Suspended Dual Recycling Interferometer for
Gravitational Wave Detection", PHYSICAL
REVIEW LETTERS, vol. 81, no. 25, 21 December
1998 (1998-12-21), US, pages 5493 - 5496,
XP055875070, ISSN: 0031-9007, DOI:
10.1103/PhysRevLett.81.5493**
• **STEVEN ROGERS ET AL: "High visibility
time-energy entangled photons from a silicon
nanophotonic chip", ARXIV.ORG, CORNELL
UNIVERSITY LIBRARY, 201 OLIN LIBRARY
CORNELL UNIVERSITY ITHACA, NY 14853, 20
May 2016 (2016-05-20), XP080702628**
• **SEBASTIAN ECKER ET AL: "Overcoming Noise
in Entanglement Distribution", ARXIV.ORG,
CORNELL UNIVERSITY LIBRARY, 201 OLIN
LIBRARY CORNELL UNIVERSITY ITHACA, NY
14853, 2 April 2019 (2019-04-02), XP081543628,
DOI: 10.1103/PHYSREVX.9.041042**

**Description**

The present invention provides a method of phase tuning and phase stabilization of multiple interferometers according to the preamble of claim 1 and a system for phase tuning and phase stabilization of two or more interferometers according to the preamble of claim 12.

Known active stabilization systems for interferometer are based on two orthogonal polarizations, the generation of a frequency-based error signal proportional to the detuning of the interferometer, the temperature control elements, or polarization-multiplexing schemes. In these systems often additional optical components in the beam path of the interferometer are necessary, usually leading to additional losses. Some of these systems cannot be used for the phase tuning and phase stabilization of multiple and/or interconnected interferometers. The article "High visibility time-energy entangled photons from a silicon nanophotonic chip" by Rogers et al. discloses a method of active phase stabilization of an unbalanced Mach-Zehnder interferometer using a phase modulator.

It is an object of the present invention to provide a more precise, low loss, and more flexible system and method for phase tuning and phase stabilization of multiple interferometers.

According to the present invention, a method of phase tuning and phase stabilization of multiple interferometers is provided according to claim 1.

An advantage of the inventive method is, that no additional components used for the tuning and/or the stabilization are arranged in the interferometer leading to a higher transmission and lower disturbance of the interferometer. In addition, by the inventive method only polarization independent elements are used for the tuning and/or stabilization, thus the polarization can be a degree of freedom in the interferometer system, for example for hyperentanglement.

Another advantage of the inventive method is the modulation and demodulation in a specific frequency range by the modulation frequency $\omega_m$ leading to a better signal to noise ratio for the error signal. This is realized by encoding the phase change in the well-defined modulation frequency $\omega_m$, because the detected signal is encoded in a small spectral range of the modulation frequency $\omega_m$ (also called lock-in technique), whereas the noise is in general distributed over a broad frequency range. This leads to the use of a detection signal with small intensity allowing a precise tuning and stabilization of the interferometer despite a noisy environment.

In a preferred embodiment, in step i) the carrier frequency $\omega_c$ is modulated by the modulation frequency $\omega_m$.

In a preferred embodiment, in step i) the carrier frequency $\omega_c$ is higher than the modulation frequency $\omega_m$, preferably the carrier frequency $\omega_c$ is in the range of 100 Hz to 1.75 GHz, more preferably the carrier frequency $\omega_c$ is in the range of 500 kHz to 1.75 GHz.

In a preferred embodiment, in step i) the modulation frequency $\omega_m$ is in the range of 100 Hz to 1 MHz, preferably in the range of 1kHz to 1 MHz.

In a preferred embodiment, in step i) the modulation frequency $\omega_m$ is generated by a signal generator.

In a preferred embodiment, in step i) the electronic modulation signal is generated by a direct digital synthesizer. The direct digital synthesizer is used to generate a frequency modulated signal around a carrier frequency by making use of the linear sweep feature.

In a preferred embodiment, in step i) the electronic modulation signal is the modulation frequency $\omega_m$ modulated around the carrier frequency $\omega_c$, preferably by the use of a linear sweep. The linear sweep generates the electronic modulation signal, whereby the electronic modulation signal is a compound of a carrier wave whose instant frequency is varying over the time.

In order to generate the electronic modulation signal with linear sweep capability, an initial frequency value $f_1$, a last frequency value $f_2$, a step size in frequency unit and a time the signal will stay at each frequency is set. The start of the ramp and the change of the frequency is set in the direct digital synthesizer by an internal software or by an external input. By choosing the external input as a trigger for changing each frequency a changing FM spectrum with multiple sidebands, preferably $\omega_c$-sidebands and $\omega_m$-sidebands are generated, where the spacing between $\omega_m$-sidebands is given by the modulation frequency $\omega_m$. The center of this frequency sweep is the carrier frequency $\omega_c$ of the electronic modulation signal.

This electronic modulation signal is fed into the phase modulator so that this electronic spectrum is converted into an optical spectrum. Higher order sidebands also appear as a multiple of the electronic modulation signal. This higher order sidebands are diminished in intensity and can be suppressed even more by using an amplifier with a finite bandwidth.

In a preferred embodiment, in step i) the electronic modulation signal $V_{FM}(t)$ is given by

$$V_{FM}(t) = E_c \cos(\omega_c t + \beta \sin(\omega_m t))$$

$$\beta = \frac{\Delta F}{\omega_m}$$

with $E_c$ as a constant and  as a modulation index and $\Delta F$ the frequency sweep value $f_2$ - $f_1$.

In a preferred embodiment, in step i) the modulation index $\beta$ of the electronic modulation signal has a value of < 20, preferably < 10. By the dependence of the modulation index $\beta$ on the modulation frequency $\omega_m$, this index is proportional to the number of $\omega_m$-sidebands around the carrier frequency $\omega_c$. Thus, the modulation index $\beta$ should have the value of < 20, preferably < 10.

In a preferred embodiment the direct digital synthesizer is triggered by a clock, preferably the clock is in the range of 100 MHz to 1 GHz, preferably in the range of 400 MHz to 600 MHz.

In a preferred embodiment the direct digital synthesizer multiplies the frequency of the clock by a phase locked loop (PPL) in order to have a higher internal system clock, preferably the system clock is in the range of 2 GHz up to 2,5 GHz. This can be realized by taking the Nyquist sampling theorem into account.

In a preferred embodiment the direct digital synthesizer is controlled by an input signal, preferably by an input signal from a computer, in order to adjust and/or activate the linear sweep and/or to set the parameter $\Delta F$ by choosing the first and second frequency value $f_{1,2}$ in the linear sweep, whereby preferably the middle frequency of the sweep is the carrier frequency $\omega_c$.

In a preferred embodiment, in step i) the modulation frequency $\omega_m$ is generated by a waveform generator. In a preferred embodiment, in step i) each high voltage value of the modulation frequency $\omega_m$ triggers the change of the frequency of the linear sweep.

In a preferred embodiment, in step i) the carrier frequency $\omega_c$ is phase modulated at the modulation frequency $\omega_m$, preferably in a direct digital synthesizer (DDS).

In a preferred embodiment, in step ii) the phase modulator is driven by the electronic modulation signal in order to phase modulate the laser beam. The electronic modulation signal is fed into the phase modulator so that this electronic spectrum is converted into an optical spectrum. In a preferred embodiment, in step ii) the phase modulation is realized by driving the optical phase modulator with the modulation signal comprising the carrier frequency $\omega_c$ which is phase modulated with the modulation frequency $\omega_m$.

In a preferred embodiment, the phase modulation in step ii) is realized in order to split the laser beam into a multitude of distinct frequency components, whereby the frequency components are the sidebands, preferably the $\omega_c$-sidebands and the $\omega_m$-sidebands. In a preferred embodiment the modulated laser beam comprises a multitude of distinct frequency components, whereby the frequency components are the sidebands, preferably the $\omega_c$-sidebands and the $\omega_m$-sidebands.

In a preferred embodiment, by the electronic modulation signal in step ii) for each $\omega_c$-sideband multiple corresponding $\omega_m$-sidebands are generated according to the modulation frequency $\omega_m$ or according to the modulation frequency $\omega_m$ and the modulation index $\beta$.

In a preferred embodiment, in step ii) the laser beam is generated by a laser. In a preferred embodiment, in step ii) the laser beam has a frequency $\Omega$ in the range of 400 nm to 1700 nm.

In a preferred embodiment, in step ii) the laser beam is a high stable laser beam, generated by a high stable laser. In a preferred embodiment, the stabilization is realized by the use of a distributed feedback laser, or Etalon in the laser, or by coupling the laser to a cavity, preferably a Fabry-Perot cavity, or by atomic resonance. The phase stabilization of the interferometer is in the order of the phase stabilization of the laser beam. In a preferred embodiment, in order to guarantee a good stabilization, the phase stability of the laser beam is one magnitude higher than the phase stabilization of the interferometer. In a preferred embodiment, in order to guarantee a good stabilization, the coherence time of the laser beam is at least one orders of magnitude higher than the unbalance of the interferometer in units of time.

In a preferred embodiment, in step ii) frequency dependent $\omega_c$-sidebands, preferably with the frequency $\Omega \pm \omega_c$ are generated according to the carrier frequency $\omega_c$. In a preferred embodiment, in step ii) frequency dependent $\omega_m$-sidebands, preferably with the frequency $\Omega \pm \omega_c \pm \omega_m$ for each $\omega_c$-sideband $\Omega \pm \omega_c$ are generated according to the modulation frequency $\omega_m$ and/or the modulation index $\beta$. With $\Omega$ as the laser frequency.

As an example, a laser beam can be considered with power $P_0$ and frequency $\Omega$ that is phase-modulated with two sinusoidal signals of depth $\beta_{c,m}$ and frequency $\omega_c$ and $\omega_m$. The electric field of the phase modulated laser beam is then given by

$$E_{ESB} = \sqrt{P_0}\,exp\{i[\Omega t + \beta_c \sin(\omega_c t + \beta_m \sin \omega_m t)]\}$$

In a preferred embodiment, each $\omega_c$-sideband signal $\Omega \pm \omega_c$ comprises a positive $\omega_c$-sideband part $\Omega + \omega_c$ and a negative $\omega_c$-sideband part $\Omega - \omega_c$.

In a preferred embodiment, the carrier frequency $\omega_c$ is tunable in order to tune the interferometer.

The phase relationship between the frequencies in a phase modulated signal is 180° between each pair of $\omega_c$-sidebands and each pair of $\omega_m$-sidebands. The difference in phase between two $\omega_c$-sidebands or two $\omega_m$-sidebands allows indirectly to measure the phase change of the interferometer with high precision by using the Schnupps modulation scheme or frontal modulation scheme. When the interferometer is changed by a perturbation the relation between the $\omega_m$-sidebands changes leading to an intensity change of the phase modulated laser beam as if it were an amplitude modulated signal. The intensity changes have a frequency proportional to the modulation frequency $\omega_m$. This can be recovered for example by the use of a photodiode with finite bandwidth, where an amplitude modulation at the modulation frequency $\omega_m$ proportional to the phase detuning of the interferometer can be observed. For example, when the $\omega_m$-sidebands recombine at the second beam splitter of the interferometer and there was no perturbation then the two beams in the two paths of the interferometer interfere constructively at the beam splitter and no intensity change on the detector is observed (meaning only a phase modulated signal but no amplitude modulated signal). When there is a perturbation in the interferometer, meaning a change in phase in one of the two paths, that means a change of the phase in one of the $\omega_m$-sidebands in one of the two paths, then when the $\omega_m$-sidebands recombine at the second beam splitter the constant constructively interference is broken and now an intensity modulation at the modulation frequency proportional to the detuning of the interferometer can be observed (due to the phase offset of the sidebands at $\omega_m$). With this method it can be achieved to detect the phase changes at just one particular frequency. This increases the sensitivity of the systems.

In a preferred embodiment, in step iii) the modulated laser beam is guided through the two or more arms of the interferometer.

In a preferred embodiment, in step iii) the modulated laser beam interferes by the interferometer. In a preferred embodiment, the modulated laser beam behind the interferometer contains the beat signal of all the frequency components of the modulated laser beam.

In a preferred embodiment, in step iv) the detector detects the intensity of the electric field of the modulated laser beam. In a preferred embodiment, the output of the detector is the detected signal. All components of the electric field of the modulated laser beam have different wavelengths, whereby the components result from the $\omega_c$-sidebands and the $\omega_m$-sidebands. The detector detects for each component a term proportional to that frequency and higher order interference terms. In a preferred embodiment, in step iv) the detector detects components of the electric field of the modulated laser beam oscillating at the modulation frequency $\omega_m$ and/or higher order interference terms at multiples of $\omega_m$. The important term for the stabilization of the interferometer is the term that oscillates at the modulation frequency $\omega_m$.

In a preferred embodiment, in step iv) the modulated laser beam is detected behind the interferometer, preferably behind only one output port of the interferometer, preferably is detected by only one detector for the one interferometer. The advantage of the inventive method is that only one detector is needed for the detection.

In a preferred embodiment, in step iv) the detected signal comprises the modulation frequency $\omega_m$, a phase term $\Delta\phi$, and a DC term, preferably $DC + \omega_m + \Delta\phi$. The phase term $\Delta\phi$ is introduced by the phase change in the interferometer. The DC term is proportional to the high stable laser beam $\Omega$ and the carrier frequency $\omega_c$. The DC term can be obtained by using a low bandwidth photodetector, preferably with a bandwidth smaller than 10 MHz, more preferably smaller than 10 MHz and at the same time high enough to observe the modulation frequency $\omega_m$.

In a preferred embodiment, in step iv) the detector detects a beat note at the frequency $\Omega + \omega_c + \omega_m$. As an example, each $\omega_m$-sideband is just shifted slightly from the frequency of the laser beam and the $\omega_c$-sideband and these $\omega_m$-sidebands produce a beat note in which only the frequency difference between them (the modulation frequency $\omega_m$) is observable in the photodetector.

In a preferred embodiment, in step iv) the bandwidth of the detector is in range of DC to infinity. The advantage of the inventive method is, that even by using a detector with a large bandwidth the interferometer can be tuned and/or stabilized in a precise manner, because the demodulation process according to the invention allows to focus on phase changes at the particular modulation frequency $\omega_m$ while still having the tuneability capacity of the carrier frequency $\omega_c$.

In a preferred embodiment, in step iv) the bandwidth of the detector is in range of DC to 20 MHz. By this smaller bandwidth the detector can get rid of unwanted interference terms, whereby the detector detects for the laser beam a DC term and the interference of the $\omega_c$-sidebands and/or $\omega_m$-sidebands is in the range of the detector bandwidth. Each $\omega_c$-sideband and/or $\omega_m$-sidebands are shifted slightly from the natural frequency of the laser beam, but these $\omega_c$-sidebands and/or $\omega_m$-sideband produce a beat note in which only frequency difference between them (the modulation frequency $\omega_m$) is observable in the photodetector. At the output interference behind the interferometer a mix of the interference at the different frequencies can be seen and the phase information of just one frequency can be recovered by the demodulation process. Higher order harmonics are avoided in the electronic domain by using finite bandwidth electronic, preferably blow 2 GHZ in step ii) and by using a variable radio frequency attenuator (for example a variable resistance). The number of generated $\omega_m$-sidebands is controlled with the modulation index $\beta$. The harmonics are produced electronically due to the digital to analog processing of the Direct Digital Synthesizer (DDS) and in the optical domain due to the non-linear process induced by the EOM. This can be controlled by using a variable radio frequency attenuator (e.g. variable resistance) and/or by the use of radio frequency filters at or behind the detection. In the case of phase modulation only the intensity of the electric field can manipulate the generation of extra sidebands contrary to the case of the electronic modulation signal generated in step i) where the modulation index $\beta$ can be controlled also by the modulation frequency $\omega_m$.

Unwanted higher order terms are called harmonics and can arise due to the nonlinearities of either the phase modulator in the optical domain and in the discretization of the signal in the case of the generation of the electronic modulation signal. These terms can be controlled by having an electronical finite bandwidth filter before the phase modulation in step ii) or by the use of low bandwidth detectors in step iv).

In a preferred embodiment, in step v) the mixing demodulates the detected signal from all the interference terms at the output of the interferometer in order to extract the phase change deviation on the interferometer of just a certain frequency, preferably the modulation frequency $\omega_m$.

In a preferred embodiment, in step v) the mixing is realized by an electronic mixer.

In a preferred embodiment, in step v) the mixing of the signal in phase with the modulation frequency $\omega_m$ is realized by the modulation frequency $\omega_m$ itself or an signal in phase and with the same frequency of the modulation frequency $\omega_m$, preferably generated by a separate frequency generator.

In a preferred embodiment, in step v) the mixer is in phase with the signal generator, preferably by the use of the same clock signal or by receiving the modulation frequency $\omega_m$, preferably from the signal generator.

In a preferred embodiment, in step v) the mixer is realized by a lock-in amplifier.

In a preferred embodiment, in step v) the output of the mixer comprises the sum and the subtraction of the modulation frequency $\omega_m$ and the detected signal, preferably $2\omega_m + \Delta\phi$ and $\omega_m - \omega_m + \Delta\phi$. Preferably the subtraction comprises the DC term of the detected signal that is proportional to the detuning of the interferometer. In a preferred embodiment, the error signal is the derivative of the interference signal, giving a locking point either to a maximum or to a minimum of the interference.

In a preferred embodiment, in step v) the DC term and/or the $2\omega_m$ of the detected signal is filtered out by a low-pass filter, preferably after the mixer. In a preferred embodiment, the cut off frequency of the low-pass filter is below $2\omega_m$.

In a preferred embodiment, in step v) the error signal comprises a linear signal proportional only to the phase change $\Delta\phi$ in the interferometer.

In a preferred embodiment, in step vi) the stabilization of the interferometer is realized by the phase relation of the modulation frequency $\omega_m$ and the detected signal behind the interferometer.

In a preferred embodiment, in step vi) the tuning of the interferometer is realized by tuning the carrier frequency $\omega_c$. The tuning of the carrier frequency $\omega_c$ leads to a shifting of the entire spectrum of the modulated laser beam while the modulation frequency $\omega_m$ remains the same. This can be understood by a shift of the $\omega_c$-sidebands while the corresponding $\omega_m$-sidebands are shifted together with the $\omega_c$-sidebands leading to a tuning by this shift while the interferometer is still stabilized because the stabilization is realized by demodulation according to the modulation frequency $\omega_m$. By tuning of the carrier frequency $\omega_c$ of the electronic modulation signal the phase of the stabilized interferometer is changed because the reference frequency at the phase modulator is changed. The $\omega_c$-sidebands and $\omega_m$-sidebands are also shifted by the same amount, but these $\omega_c$-sidebands and $\omega_m$-sidebands will preserve their separation between them by not changing the modulation frequency $\omega_m$. The changing of the carrier frequency $\omega_c$ is realized for example by shifting the clock in step i) of the direct digital synthesizer. By changing the clock of the direct digital synthesizer in step i) the carrier frequency $\omega_c$ is shifted and the interferometer can follow this reference change. In a preferred embodiment, in step vi) first the interferometer is stabilized and then the stabilized interferometer is tuned by a shift of the carrier frequency $\omega_c$.

In a preferred embodiment, in step vi) the error signal is fed into a proportional-derivative-integral controller (PID) in order to control the movable element in the interferometer. The proportional-derivative-integral controller (PID) is capable of maintaining a certain locking point as a function of an error signal by applying an inverse and proportional voltage to the actuator when the locking point value has changed.

The object is achieved by a method of phase tuning and phase stabilization of multiple interferometers, whereby the method comprises the steps claim 1.

According to the invention the modulation signal comprises for each interferometer i a carrier frequency $\omega_{ci}$ and/or a modulation frequency $\omega_{mi}$.

An advantage of the invention is, that multiple interferometers can be stabilized by the use of a separate frequency $\omega_m$-sideband for each interferometer. Here i = 1, ...,n and n is an integer number. This means that the modulation signal comprises for each interferometer $i$ one carrier frequency $\omega_{ci} = \omega_{c1}, \omega_{c2}, ..., \omega_{cn}$ and/or for each interferometer one modulation frequency $\omega_{mi} = \omega_{m1}, \omega_{m2}, ..., \omega_{mn}$, with $i = 1, ...,n$ and $n$ is an integer number.

In a preferred embodiment, each carrier frequency $\omega_{ci}$ and/or each modulation frequency $\omega_{mi}$ of two or more interferometer differs from each other, preferably by $\omega_{c1} \neq \omega_{c2}, ...$ and/or $\omega_{m1} \neq \omega_{m2}, ...$ , preferably differs from each other and multiples of the carrier frequencies $\omega_{ci}$ and/or modulation frequencies $\omega_{mi}$.

In a preferred embodiment, one carrier frequency $\omega_{ci}$ is used for one or for multiple interferometers. The advantage of the use of an individual carrier frequency $\omega_{ci}$ for each interferometer is the possibility to tune each interferometer separate. The advantage of the use of a carrier frequency $\omega_c$ for multiple interferometers is the easier method and setup for tuning a multiple interferometer.

In a preferred embodiment, an individual modulation frequency $\omega_{mi}$ is used for each interferometer $i$. The advantage of the use of an individual modulation frequency $\omega_{mi}$ for each interferometer is the possibility to stabilize each interferometer independently.

In a preferred embodiment for a multitude of interferometers, in step iii) the modulated laser beam is guided through the two or more arms of all interferometers. The guidance of the modulated laser beam through two or more, preferably all arms of the interferometers is important for a method of phase tuning and phase stabilization for a multitude of interferometers in order to be able to tune each interferometer.

In a preferred embodiment, an individual carrier frequency $\omega_{ci}$ for each interferometer $i$ is modulated by an individual modulation frequency $\omega_{mi}$. This embodiment leads to an individual $\omega_{ci}$-sideband for each carrier frequency $\omega_{ci}$ and individual $\omega_m$-sidebands according to the corresponding modulation frequency $\omega_{mi}$ for each of the $\omega_{ci}$-sideband. In this embodiment each carrier frequency $\omega_{ci}$ is modulated by the corresponding multiple modulation frequency $\omega_{mi}$. This can be realized by the modulation of the carrier frequency $\omega_{ci}$ by the corresponding multiple modulation frequency $\omega_{mi}$ and then by a combination of the multiple modulated signals, preferably by a combination in a radio frequency combiner.

In a preferred embodiment, one carrier frequency $\omega_c$ is modulated by one or multiple modulation frequency $\omega_{mi}$. The embodiment with one carrier frequency $\omega_c$ and multiple modulation frequency $\omega_{mi}$ would lead to a $\omega_c$-sideband according to $\omega_c$ and multiple $\omega_m$-sidebands according to the multiple modulation frequency $\omega_{mi}$ for the $\omega_c$-sideband.

In a preferred embodiment, the multiple carrier frequencies $\omega_{ci}$ and/or the multiple modulation frequencies $\omega_{mi}$ are generated, used for demodulation, and/or used for the tuning and/or stabilization for a multitude of interferometers $i$ according to one of the above-mentioned examples for one interferometer.

In a preferred embodiment for a multitude of $n$ interferometers, preferably a multitude of $n$ interconnected interferometers, the stabilization is realized by the following steps, with $i = 1, ...,n$ and $n$ is an integer number, preferably in this order:

a) stabilization of the ith interferometer, preferably by a modulation and a demodulation with the modulation frequency $\omega_{mi}$;
b) tuning of the $i$th interferometer, preferably by the carrier frequency $\omega_{ci}$, in order to allow the transmission of the modulated laser beam through two arms of the $i + 1$th interferometer;
c) stabilization of the $i + 1$th interferometer, preferably by a modulation and a demodulation with the modulation frequency $\omega_{mi+1}$;

In a preferred embodiment, each modulation frequency $\omega_{mi}$ is generated in an individual wave form generator. In a preferred embodiment, each mixing is realized by an individual electronic mixer. In a preferred embodiment, each individual mixer is in phase with the corresponding individual signal generator.

In a preferred embodiment, each carrier frequency $\omega_{ci}$ is modulated in an individual Direct Digital Synthesizer (DDS).

In a preferred embodiment, the demodulation of the detected signal is realized for each modulation frequency $\omega_{mi}$ in a separate mixer.

The object is further achieved by a system for phase tuning and phase stabilization of two or more interferometers according to claim 12.

According to the invention, the two or more interferometers are Mach-Zehnder interferometers and/or Michelson interferometers, preferably balanced or unbalanced Mach-Zehnder interferometers and/or balanced or unbalanced Michelson interferometers.

Unbalanced interferometer means here, that the at least two arms in the interferometer have different path lengths. In an unbalanced interferometer the arms of the interferometer have a path difference that is large enough to prohibit first-order interference, preferably of single photons from an entangled photon source.

According to the invention, the system comprises two or more interferometers, and the method is used for phase tuning and phase stabilization of two or more interferometers.

In a preferred embodiment of the system and the method, the two or more interferometers are interconnected and/or spatially separated. Interconnected means, that two interferometers share an optical component, for example a beam splitter. Spatially separated interferometer means, that each interferometer comprises its own optical components. An interconnected interferometer with two interferometers is built by sharing at least one optical component. An interconnected interferometer with three or more interferometers is built by sharing at least one optical component between the first and the second interferometer and at least one optical component between the second and third interferometer and so on.

As an example, two interconnected Mach-Zehnder Interferometers are built by three beam splitters (BS), whereby the first Mach-Zehnder Interferometer is built by the first beam splitter and the second beam splitter and at least two additional reflection components forming the first Mach-Zehnder Interferometer. The second Mach-Zehnder Interferometer is built by the second beam splitter, which is also a part of the first Mach-Zehnder Interferometer, and the third beam splitter and at least two additional reflection components forming the second Mach-Zehnder Interferometer. The difference of interconnected Mach-Zehnder Interferometer is that the second interferometer is fed by two input paths compared to only one input path for a spatial separated interferometer.

An advantage of the inventive method and system is, that even two or more interconnected Mach-Zehnder Interferometers can be tuned and/or stabilized by only one phase modulated laser beam of the inventive system and the inventive method.

The terms in the detected signal for stabilization of for example an interconnected interferometer with two interferometers are the terms oscillating at the two different modulation frequencies $\omega_{m1}$ and $\omega_{m2}$ where each of this term contains the phase detuning of the interferometers. For example, for the case of two interferometers sharing one beam splitter (an interconnected interferometer with three beam splitter) the phases are coupled but the phase change of each interferometer can be attribute to one modulation frequency $\omega_{mi}$. In contrast to that, for a multitude of separated interferometers unused output of each second beam splitter can be used for detection, in order to detect the phase changes of both interferometers separately.

In a preferred embodiment of the system and the method, the movable element of the interferometer is a movable reflection component, preferably a movable mirror and/or a movable beam splitter, and/or movable multiple mirrors, and/or a motor stage with one or more optical components, and/or a piezoelectric-transducer stage with one or more optical components. The optical components of the motor stage or the piezoelectric-transducer stage are one or more reflection components, preferably mirrors.

In a preferred embodiment of the system and the method, the movable element of the interferometer comprises a piezo element.

In a preferred embodiment of the system and the method, the laser generates a laser beam with a frequency $\Omega$ in the range of 400 nm to 1600 nm. In a preferred embodiment of the system and the method, the laser is a high stable laser, preferably a frequency stabilized laser, generating a high stable laser beam.

In a preferred embodiment of the system, the laser is used for the generation of the laser beam in step ii) of the method, preferably before the phase modulation of the high stable laser beam.

In a preferred embodiment of the system and the method, the phase modulator is an electro optical modulator (EOM), preferably a broad band electro optical modulator. The tuning range is determined by the bandwidth of the phase modulator. The electro optical modulator (EOM) is capable of modulating the phase of the light propagating through it by using the electro-optic effect, in which a material changes its refractive index as a function of an applied electric field. The electric field inserted is proportional to the electronic modulation signal. The electro optical modulator (EOM) converts the electronic signal into an optical spectrum.

In a preferred embodiment of the system and the method, the phase modulator is an in-fiber or a free space phase modulator.

In a preferred embodiment of the system, the phase modulator is used for the phase modulation in step ii) of the method.

In a preferred embodiment of the system and the method, the bandwidth of the detector is in range of DC to infinity. The advantage of the inventive method is, that even by using a detector with a large bandwidth the interferometer can be tuned and/or stabilized in a precise manner, because the demodulation process according to the invention allows to focus on phase changes at the particular modulation frequency $\omega_m$.

In a preferred embodiment of the system and the method, the detector is a photodetector, preferably a low bandwidth photodetector, more preferably with a bandwidth below 10 MHz. By such a low bandwidth photodetector a DC term is produced in the detected signal by the high-frequency terms, for example the laser beam and/or the carrier frequency $\omega_c$.

In a preferred embodiment of the system and the method, the modulation electronic comprises a waveform generator (WFG) and a Direct Digital Synthesizer (DDS). In a preferred embodiment of the system and the method, the Direct Digital Synthesizer (DDS) is driven by an external clock, preferably the external clock is adjustable in order to change the carrier frequency $\omega_c$.

In a preferred embodiment of the system and the method, the modulation electronic comprises for a multitude of carrier frequencies $\omega_{ci}$ a multitude of Direct Digital Synthesizers (DDS), preferably for each carrier frequency $\omega_{ci}$ one individual of Direct Digital Synthesizer (DDS), preferably for each phase stabilized interferometer.

In a preferred embodiment of the system and the method, the modulation electronic comprises for a multitude of modulation frequencies $\omega_{mi}$ a multitude of waveform generator (WFG), preferably for each modulation frequency $\omega_{mi}$ one individual waveform generator (WFG), preferably for each phase stabilized interferometer.

In a preferred embodiment of the system and the method, comprising a multitude of waveform generators (WFG) and/or Direct Digital Synthesizers (DDS) the modulation electronic comprises in addition a combiner, preferably a radio frequency combiner. In a preferred embodiment of the system and the method, the electronic modulation signal is generated by the combination of the output signals of the multitude of Direct Digital Synthesizers (DDS).

In a preferred embodiment of the system and the method, the modulation electronic comprises in addition one or more amplifier. Unwanted higher order harmonics at multiples of the carrier frequency $\omega_{ci}$ can be suppressed by the use of an amplifier with a finite bandwidth.

In a preferred embodiment of the system and the method, the modulation electronic is used for the generation of the electronic modulation signal in step i). In a preferred embodiment of the system and the method, the demodulation electronic comprises a mixer. In a preferred embodiment of the system and the method, the demodulation electronic comprises a mixer for each modulation frequency $\omega_{mi}$, preferably for each phase stabilized interferometer.

In a preferred embodiment of the system and the method, the demodulation electronic is used for the demodulation of the detected signal in step v).

In a preferred embodiment of the system and the method, the demodulation electronic comprises in addition a low-pass filter (LPF) and/or a proportional-derivative-integral controller (PID), preferably an additional low-pass filter (LPF) and/or a proportional-derivative-integral controller (PID) for each modulation frequency $\omega_{mi}$, preferably for each phase stabilized interferometer.

In a preferred embodiment of the system and the method, the laser, and/or the phase modulator, and/or the interferometer, and/or the detector is a free space component or an in-fiber component.

In a preferred embodiment of the system and the method, the system and the method are used for phase tuning and phase stabilization of multiple interferometers used for the measurement of energy-time entanglement, preferably are used for interconnected interferometers.

An advantage of the inventive stabilization method and system is, that the energy-time entangled photons or particles are not attenuated by additional components, for example the used components for the stabilization with two orthogonal polarization beams.

An additional advantage of the inventive stabilization method and system is, that the energy-time entangled photons can furthermore be entangled in additional properties, for example in polarization, whereby the addition properties are not disturbed by the inventive stabilization method and system.

In a preferred embodiment of the system and the method, the energy-time entanglement system comprises an entangled photon source, at least two receivers and at least one interferometer for each receiver. The inventive system is arranged at the source and/or in front of each receiver. The advantage of only one tuning and stabilization system is that all interferometers at all receivers can be tuned and stabilized with a single modulated laser beam. Preferably the modulated laser beam is split into multiple beams according to the number of receivers. The advantage of the inventive system in front of each receiver is the independence from the source and the possibility to tune and stabilize multiple interconnected interferometers used for energy-time entanglement measurements.

The above and other aspects, features and advantages of the present invention will become more apparent from the following detailed description when taken in conjunction with the accompanying drawings.

Brief Description of the Drawings:

Fig. 1: schematic diagram of a non-claimed system for active stabilization and tuning of an interferometer;

Fig. 2: schematic diagram of an inventive system for active stabilization and tuning of two interferometers;

Fig. 3: schematic diagram of an inventive system for active stabilization and tuning of an interconnected interferometer by two interferometers sharing an optical component;

Fig. 4: schematic diagram of the frequency of a modulated laser beam;

Fig. 5: schematic diagram of the frequency of a modulated laser beam with two carrier frequencies $\omega_i$ and modulation frequencies $\omega_{mi}$;

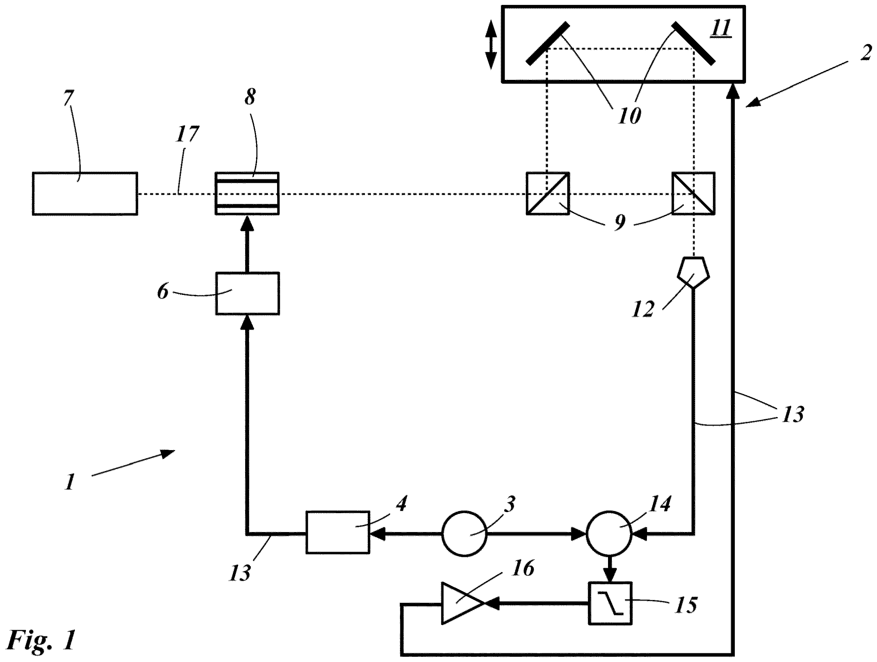

Fig. 1 shows a non-claimed system 1 for active stabilization and tuning of an interferometer 2. The interferometer 2 in the example of Fig. 1 is an unbalanced interferometer 2 with a short arm built by a first beam splitter 9 (left) and a second beam splitter 9 (right) and a long arm built by the first beam splitter 9 (left), two mirrors 10 arranged on a movable element 11, and the second beam splitter 9 (right).

The system 1 for active stabilization and tuning of an interferometer 2 comprises a frequency generator 3 generating the modulation frequency $\omega_m$. This electronic signal is guided via a cable 13 to a direct digital synthesizer 4. The direct digital synthesizer 4 can be controlled by a computer and can comprise an adjustable internal or an adjustable external clock. The direct digital synthesizer 4 generates by the clock and the modulation frequency $\omega_m$ the electronic modulation signal. This generation is realized by a modulation of the modulation frequency $\omega_m$ around the carrier frequency $\omega_c$ in the direct digital synthesizer 4 by the use of a linear sweep. The linear sweep generates the electronic modulation signal, whereby the electronic modulation signal is a compound of a carrier wave whose instant frequency is varying over the time.

In order to generate the electronic modulation signal with linear sweep capability an initial frequency value $f_1$, a last frequency value $f_2$, a step size in frequency unit and a time the signal will stay at each frequency is set in the direct digital synthesizer 4. The frequency step size (to sweep the frequency from $f_1$ to $f_2$) and the rising time in between the frequencies is set on the direct digital synthesizer 4. The change of frequency from one value to the other is controlled by a 1-bit modulation frequency signal (high voltage means a change to the next frequency). The rising time has to be set on the direct digital synthesizer 4 to be smaller than the modulation frequency $\omega_m$. The start of the ramp and the change of the frequency can be set in the direct digital synthesizer 4 by an external input. By choosing the external input as a trigger for changing each frequency a changing FM spectrum with multiple $\omega_m$-sidebands where the spacing between $\omega_m$-sidebands is given by the modulation frequency $\omega_m$ is generated. This FM spectrum is the electronic modulation signal. The center of the frequency sweep is the carrier frequency $\omega_c$ of the electronic modulation signal. This electronic modulation signal is fed into a phase modulator 8 so that this electronic spectrum can be converted into an optical spectrum.

Harmonics also appear as a multiple of the electronic modulation signal. This Harmonics are diminished in intensity and can be suppressed even more by using an amplifier 6 with a finite bandwidth.

The system 1 for active stabilization and tuning of an interferometer 2 comprises further a laser 7 generating a laser beam 17. The laser beam 17 is guided through the phase modulator 8 in order to phase modulate the laser beam 17 according to the electronic modulation signal. The phase modulated laser beam 17 is then coupled into the interferometer 2, traveling the short and the long arm in the interferometer 2 and interfere at the second beam splitter 9 (left).

Behind one output of the second beam splitter 9 (left) a detector 12 is located, detecting the intensity of the modulated laser beam 17. The electronic signal of the detector 12, the so-called detected signal, is sent via a cable 13 to a mixer 14. By the use of a low bandwidth photodetector the detected signal comprises a DC term for the laser beam, a modulation frequency $\omega_m$ term and higher order terms.

For the demodulation of the detected signal the mixer 14 receives the detected signal from the detector 12 and the modulation frequency $\omega_m$ from the frequency generator 3, as shown in Fig. 1. The mixer 14 is used to demodulate the detected signal from all the interference terms in order to extract the phase change deviation on the interferometer of just the modulation frequency $\omega_m$. The demodulated signal is guided through a low-pass filter 15 in order to get rid of higher order interference terms and is then guided through a proportional-derivative-integral controller (PID) 16 in order to generate a stabilization and tuning signal (error signal) for the interferometer 2. To observe the generated error signal after the demodulation process and the low path filter a scan can be apply to the actuator in the interferometer. The error signal is then optimized in amplitude by tuning the phase at which the signal from the frequency generator 3 reaches the mixer 14. The stabilization and tuning signal is used to drive the movable element 11 in the interferometer as depicted in Fig. 1 by the arrows. The proportional-derivative-integral controller (PID) 16 is a device capable of maintaining a certain locking point as a function of an error signal by applying an inverse and proportional voltage to the actuator (the movable element 11) when the locking point value has changed.

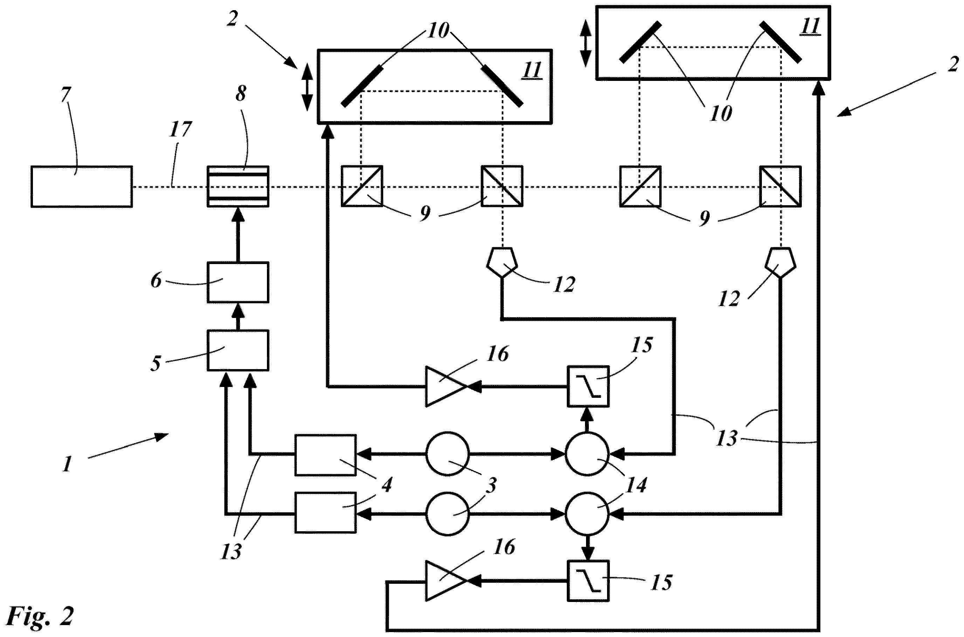

Fig. 2 shows an inventive system 1 for active stabilization and tuning of two interferometers 2. Both interferometers 2 in Fig. 2 are unbalanced interferometers 2 with each a short and a long arm. The two interferometers 2 share no optical component and are spatially separated. The short arms of both interferometers 2 are each built by a first beam splitter 9 (left) and a second beam splitter 9 (right) and the long arm is each built by the first beam splitter 9 (left), two mirrors 10 arranged on a movable element 11, and the second beam splitter 9 (right).

In contrast to the example of Fig. 1, in Fig. 2 the system 1 comprise for each interferometer 2 a separate frequency generator 3, direct digital synthesizer 4, detector 12 and mixer 14. The generation of the electronic modulation signal, the detection, and the demodulation in the mixer 14 is realized according to the description in Fig. 1 for each interferometer 2 in Fig. 2.

In contrast to the example of Fig. 1, in Fig. 2 the two electronic modulation signals from the two direct digital modulators 4 are combined in a combiner 5 and amplified by an amplifier 6. This combined electronic modulation signal is used to drive the phase modulator 8 in Fig. 2 in order to phase modulate the laser beam 17.

By the use of two frequency generators 3 two different modulation frequencies $\omega_{m1,2}$ are generated and used for the stabilization of each interferometer independently. This is realized by the demodulation of the detected signal with the corresponding modulation frequency $\omega_{m1}$ or $\omega_{m2}$ in the corresponding mixer 14.

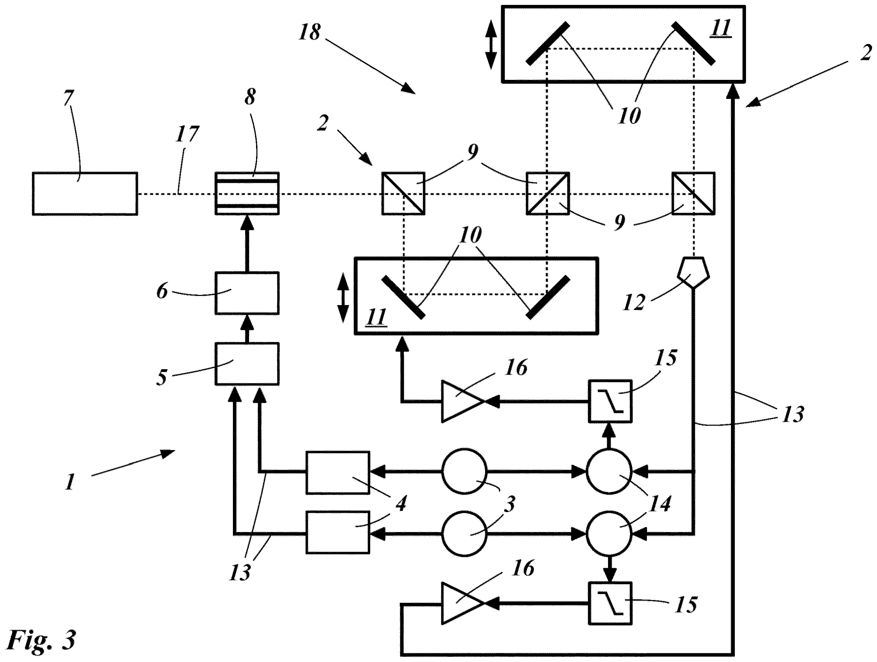

Fig. 3 shows an inventive system 1 for active stabilization and tuning of an interconnected interferometer 18. This interconnected interferometer 18 comprises two interferometers 2 which are connected by sharing a beam splitter 9 (middle). Both interferometers 2 in Fig. 3 are unbalanced interferometers 2 with each a short and a long arm. The short arm of the first interferometer 2 is built by the first beam splitter 9 (left) and the second beam splitter 9 (middle) and the long arm is built by the first beam splitter 9 (left), two mirrors 10 arranged on a movable element 11, and the second beam splitter 9 (middle). The short arm of the second interferometer 2 is built by the second beam splitter 9 (middle) and a third beam splitter 9 (right) and the long arm is built by the second beam splitter 9 (middle), two mirrors 10 arranged on a movable element 11, and the third beam splitter 9 (right). Thus, the two interferometers 2 share the second beam splitter 9 (middle).

The difference of the interconnected interferometer 18 is, that these interferometers 2 are connected by sharing an optical component. The input of the second interferometer 2 is not realized in only one input port of the second beam splitter 9 (middle), but in two input ports of the second beam splitter 9 (middle). In contrast to that, for example in Fig. 2 the input of the second interferometer 2 is realized only in one input port.

In the example of Fig. 3 with the interconnected interferometer 18 the output of the second interferometer 2 contains the beat signal of both modulation frequencies $\omega_{m1}$ and $\omega_{m2}$. Each of this term contains the phase detuning of the interconnected interferometer 18. The phase change of both interferometers 2 couple but can be assigned of each interferometer 2 individually to the modulation frequency $\omega_{m1}$ or the modulation frequency $\omega_{m2}$. This is realized by the demodulation with either the modulation frequency $\omega_{m1}$ or the modulation frequency $\omega_{m2}$ in the corresponding mixer 14.

As in the example of Fig. 2, in Fig. 3 the system 1 comprises for each interferometer 2 a separate frequency generator 3, direct digital synthesizer 4, detector 12 and mixer 14. The two electronic modulation signals from the two direct digital modulators 4 are combined in a combiner 5 and amplified by an amplifier 6. This combined electronic modulation signal is used to drive the phase modulator 8 in Fig. 3 in order to phase modulate the laser beam 17.

By the use of two frequency generators 3 two different modulation frequencies $\omega_{m1,2}$ are generated and used for the stabilization of each interferometer 2 independently, even for the stabilization and tuning of the interconnected interferometer 18 in Fig. 3. This is realized by the demodulation of the detected signal with the corresponding modulation frequency $\omega_{m1}$ or $\omega_{m2}$ in the first or second mixer 14. In contrast to the example of Fig. 2, in Fig. 3 only one detector 12 is arranged behind one output port of the second interferometer 2 of the interconnected interferometer 18.

In order to stabilize and tune both interferometers 2 of the interconnected interferometer 18 from Fig. 3 the first and/or the second electronic modulation signal from the first and/or the second direct digital synthesizer 4 has to be adjustable, for example by an adjustable clock or by a control of the direct digital synthesizer 4 by a computer. The first and/or the second electronic modulation signal has to be adjustable in order to avoid no laser beam in the short or the long arm of the second interferometer 2 by constructive interference. By tuning one of the electronic modulation signals before the combiner 5 the modulated laser beam is generated by the combined electronic modulation signal in such a way that almost the same intensity is going through the short and the long arm of the second interferometer 2. This is realized in order to stabilize the interferometer 2 either at the maximum or the minimum of interference at the output of the interferometer 2.

For that, for the stabilization of the interconnected interferometer 18 at first the first interferometer 2 is stabilized by the use of the modulation frequency $\omega_{m1}$ and then for example the second carrier frequency $\omega_{c2}$ is tuned in such a way that almost the same intensity is going through the short and the long arm of the second interferometer 2. By this adjustment the modulation frequency $\omega_{m2}$ for the second interferometer 2 can be used to extract just the phase change in the second interferometer 2 and thus to stabilize and/or tune the second interferometer 2 of the interconnected interferometer 18.

In contrast to the interconnected interferometer 18 in Fig. 3, for the two separate interferometers 2 from Fig. 2 it is not necessary to tune the electronic modulation signal for the second interferometer 2, because the first beam splitter 9 of the second interferometer 2 has only one input port and for example the interference in the first interferometer 2 can be set in such a way, that the input of the second interferometer 2 is at its maximum intensity, for example by locking the first interferometer 2 to the dark fringes in the detector 12 for the first interferometer 2. By this the intensity in both arms of the second interferometer 2 is half of the maximum intensity.

In all examples of Fig. 1 to Fig. 3 a tuning of the carrier frequency of the first and/or second electronic modulation signal before the combiner 5 can be used to tune the phase of the first and/or second interferometer 2 while holding the interferometers 2 stabilized. For that a steady and constant change but no rapid change of the first and/or second electronic modulation signal is used.

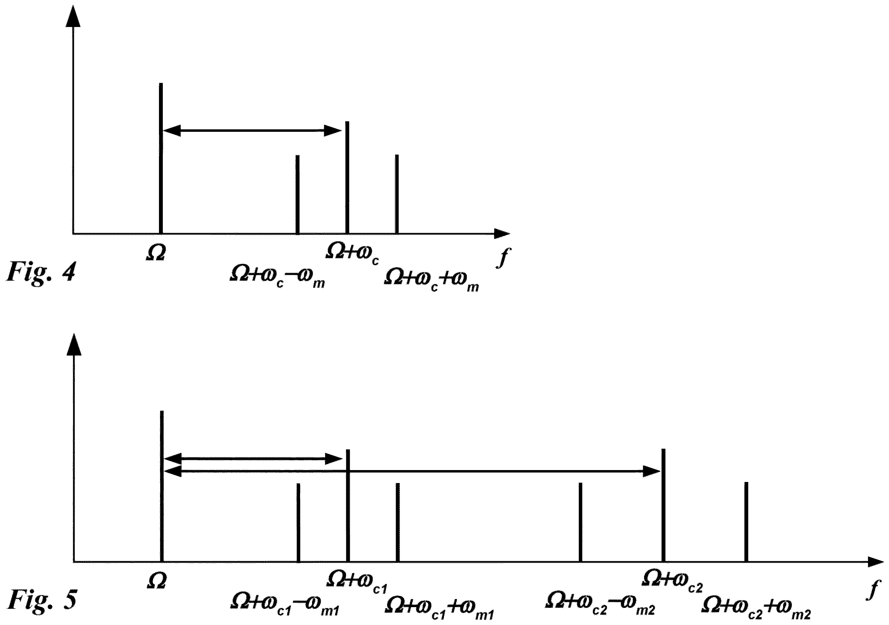

Fig. 4 shows a schematic diagram of the frequencies of a modulated laser beam with the frequency $\Omega$ of the laser phase modulated in order to generate $\omega_c$-sideband with the frequency $\Omega + \omega_c$ and for the $\omega_c$-sideband two $\omega_m$-sidebands with the frequency $\Omega + \omega_c \pm \omega_m$.

The interferometer is tuned by tuning the carrier frequency $\omega_c$ which leads to a shifting of the entire spectrum of the modulated laser beam while the modulation frequency $\omega_m$ remains the same. This can be understood by a shift (arrow in Fig. 4) of the $\omega_c$-sidebands while the corresponding $\omega_m$-sidebands are shifted together with the $\omega_c$-sidebands leading to a tuning by this shift while the interferometer is still stabilized, because the stabilization is realized by demodulation according to the modulation frequency $\omega_m$.

Fig. 5 shows a schematic diagram of the frequency of a modulated laser beam with two different carrier frequencies $\omega_{c1}$, $\omega_{c2}$ and two different modulation frequencies $\omega_{m1}$, $\omega_{m2}$. The first carrier frequency $\omega_{c1}$ is modulated with the first modulation frequency $\omega_{m1}$ and the second carrier frequency $\omega_{c2}$ is modulated with the second modulation frequency $\omega_{m2}$. Such a modulated laser beam can be used for the tuning and stabilization of two separated interferometer 2 or an interconnected interferometer 18 with two interferometers 2.

Reference signs:

| | |
|---|---|
| 1 | system for active stabilization and tuning |
| 2 | interferometer |
| 3 | frequency generator |
| 4 | direct digital synthesizer |
| 5 | combiner |
| 6 | amplifier |
| 7 | laser |
| 8 | phase modulator |
| 9 | beam splitter (BS) |
| 10 | mirror |
| 11 | movable element |
| 12 | detector |
| 13 | electronic cable |
| 14 | mixer |
| 15 | low pass filter |
| 16 | proportional-derivative-integral controller (PID) |
| 17 | laser beam |
| 18 | interconnected interferometer |

**Claims**

1. Method for phase tuning and phase stabilization of multiple interferometers (2), preferably interferometers used for the measurement of energy-time entanglement, whereby the method comprises:

   i) generation of an electronic modulation signal;
   ii) phase modulation of a laser beam by a phase modulator (8) and the electronic modulation signal;
   iii) passing the modulated laser beam through the interferometers, whereby the interferometers are Mach-Zehnder interferometers and/or Michelson interferometers;
   iv) detection of the modulated laser beam by at least one detector (12);
   v) demodulation of the detected signal or signals in order to generate an error signal for each interferometer;
   vi) tuning and/or stabilization of the interferometers by a feedback of the respective error signal to a respective movable element (11) of each interferometer,

   **characterized in that**

   the electronic modulation signal in step i) comprises a carrier frequency $\omega_c$ and a modulation frequency $\omega_m$, and the modulation in step ii) generates frequency dependent sidebands, preferably $\omega_c$-sidebands corresponding to the carrier frequency $\omega_c$ and $\omega_m$-sidebands corresponding to the modulation frequency $\omega_m$, and the demodulation of the detected signal or signals in step v) is realized by mixing the detected signal or signals with a signal in phase and with the frequency of the modulation frequency $\omega_m$, and the modulation signal comprises for each interferometer i a carrier frequency $\omega_{ci}$ and/or a modulation frequency $\omega_{mi}$, and that an individual modulation frequency $\omega_{mi}$ is used for each interferometer i, and/or that an individual carrier frequency $\omega_{ci}$ for each interferometer i is modulated by an individual modulation frequency $\omega_{mi}$.

2. Method according to claim 1,
   **characterized in**
   **that** the electronic modulation signal is the modulation frequency $\omega_m$ modulated around the carrier frequency $\omega_c$, preferably by the use of a linear sweep.

3. Method according to claim 1 or 2,
   **characterized in**
   **that** in step ii) the electronic modulation signal is fed into the phase modulator so that electronic spectrum of the electronic modulation signal is converted into an optical spectrum in order to generate the modulated laser beam.

4. Method according to one of the claims 1 to 3,
   **characterized in**
   **that** in step ii) the phase modulator is driven by the electronic modulation signal in order to phase modulate the laser beam.

5. Method according to one of the claims 1 to 4,
   **characterized in**

   **that** in step ii) frequency dependent $\omega_c$-sidebands, preferably with the frequency $\Omega \pm \omega_c$ are generated according to the carrier frequency $\omega_c$, and/or
   **that** in step ii) frequency dependent $\omega_m$-sidebands, preferably with the frequency $\Omega \pm \omega_c \pm \omega_m$ for each $\omega_c$-sideband $\Omega \pm \omega_c$ are generated according to the modulation frequency $\omega_m$ and/or the modulation index $\beta$.

6. Method according to one of the claims 1 to 5,
   **characterized in**
   **that** the carrier frequency $\omega_c$ is tunable in order to tune the interferometer.

7. Method according to one of the claims 1 to 6,
   **characterized in**
   **that** in step iii) the modulated laser beam is guided through the two or more arms of the interferometer.

8. Method according to one of the claims 1 to 7,
   **characterized in**
   **that** in step v) the error signal comprises a linear signal proportional only to the phase change $\Delta\phi$ in the interferometer.

9. Method according to one of the claims 1 to 8,
   **characterized in**

   **that** in step vi) the stabilization of the interferometer is realized by the phase relation of the modulation frequency $\omega_m$ and the detected signal behind the interferometer, and/or
   **that** in step vi) the tuning of the interferometer is realized by tuning the carrier frequency $\omega_c$, preferably leading to a shift of the $\omega_m$-sidebands while the modulation frequency $\omega_m$ is unchanged.

10. Method according to one of the claims 1 to 9,
    **characterized in that**
    the modulation signal generates frequency dependent $\omega_{ci}$-sidebands corresponding to the carrier frequencies $\omega_{ci}$ and frequency dependent $\omega_m$-sidebands corresponding to the modulation frequencies $\omega_{mi}$.

11. Method according to one of the claims 1 to 10,
    **characterized in**

    **that** each modulation frequency $\omega_{mi}$ is generated in an individual wave form generator, and/or
    **that** the demodulation of the detected signal is realized for each modulation frequency $\omega_{mi}$ in a separate mixer

12. System (1) for phase tuning and phase stabilization of two or more interferometers (2), preferably interferometers used for the measurement of energy-time entanglement, whereby the system comprises:

    a laser (7), a phase modulator (8), interferometers (2), at least one detector (12), a modulation electronic (4, 5, 6) and demodulation electronic (14, 15),
    whereby the laser is configured to generate a laser beam which is guided to the phase modulator, and
    whereby the modulation electronic is configured to generate an electronic modulation signal and the phase modulator is fed with the electronic modulation signal in order to modulate the laser beam, and
    whereby modulated laser beam is guided through the interferometers and is detected behind the interferometers by the detector or the detectors, and
    whereby the demodulation electronic is configured to generate an error signal for each interferometer used as a feedback to a respective movable element (11) of each interferometer,

**characterized in that**
the phase modulator is arranged outside of the interferometers, and
the two or more interferometers are Mach-Zehnder interferometers and/or Michelson interferometers.

**13.** System according to claim 12,
**characterized in**

**that** one of the interferometers is a balanced or an unbalanced Mach-Zehnder interferometer, and/or
one of the interferometers is a balanced or an unbalanced Michelson interferometer.

**14.** System according to claim 12 or 13,
**characterized in**
**that** the two or more interferometers are interconnected and/or spatially separated.


**Patentansprüche**

**1.** Verfahren zur Phasenabstimmung und Phasenstabilisierung von mehreren Interferometern (2), vorzugsweise von Interferometern, die für die Messung der Energie-Zeit-Verschränkung verwendet werden, wobei das Verfahren umfasst:

i) Erzeugung eines elektronischen Modulationssignals;
ii) Phasenmodulation eines Laserstrahls durch einen Phasenmodulator (8) und das elektronische Modulationssignal;
iii) Durchleiten des modulierten Laserstrahls durch die Interferometer, wobei die Interferometer Mach-Zehnder-Interferometer und/oder Michelson-Interferometer sind;
iv) Detektion des modulierten Laserstrahls durch mindestens einen Detektor (12);
v) Demodulation des detektierten Signals oder der detektierten Signale, um ein Fehlersignal für jedes Interferometer zu erzeugen;
vi) Abstimmung und/oder Stabilisierung der Interferometer durch eine Rückkopplung des jeweiligen Fehlersignals auf ein jeweiliges bewegliches Element jedes Interferometers,

**dadurch gekennzeichnet, dass**

das elektronische Modulationssignal in Schritt i) eine Trägerfrequenz $\omega_c$ und eine Modulationsfrequenz $\omega_m$ umfasst, und
die Modulation in Schritt ii) frequenzabhängige Seitenbänder erzeugt, vorzugsweise $\omega_c$-Seitenbänder entsprechend der Trägerfrequenz $\omega_c$ und $\omega_m$-Seitenbänder entsprechend der Modulationsfrequenz $\omega_m$, und
die Demodulation des detektierten Signals oder der detektierten Signale in Schritt v) durch Mischen des detektierten Signals oder der detektierten Signale mit einem Signal in Phase und mit der Frequenz der Modulationsfrequenz $\omega_m$ realisiert wird, und
das Modulationssignal für jedes Interferometer $i$ eine Trägerfrequenz $\omega_{ci}$ und/oder eine Modulationsfrequenz $\omega_{mi}$ umfasst, und
für jedes Interferometer $i$ eine individuelle Modulationsfrequenz $\omega_{mi}$ verwendet wird, und/oder dass für jedes Interferometer $i$ eine individuelle Trägerfrequenz $\omega_{ci}$ durch eine individuelle Modulationsfrequenz $\omega_{mi}$ moduliert wird.

**2.** Verfahren nach Anspruch 1,
**dadurch gekennzeichnet,**
**dass** das elektronische Modulationssignal die um die Trägerfrequenz $\omega_c$ modulierte Modulationsfrequenz $\omega_m$ ist, vorzugsweise durch die Verwendung eines linearen Sweeps.

**3.** Verfahren nach Anspruch 1 oder 2,
**dadurch gekennzeichnet,**
**dass** in Schritt ii) das elektronische Modulationssignal in den Phasenmodulator eingespeist wird, sodass das elektronische Spektrum des elektronischen Modulationssignals in ein optisches Spektrum umgewandelt wird, um den modulierten Laserstrahl zu erzeugen.

4. Verfahren nach einem der Ansprüche 1 bis 3,
**dadurch gekennzeichnet,**
**dass** in Schritt ii) der Phasenmodulator durch das elektronische Modulationssignal angesteuert wird, um den Laserstrahl in der Phase zu modulieren.

5. Verfahren nach einem der Ansprüche 1 bis 4,
**dadurch gekennzeichnet,**

**dass** in Schritt ii) frequenzabhängige $\omega_c$-Seitenbänder, vorzugsweise mit der Frequenz $\Omega \pm \omega_c$ entsprechend der Trägerfrequenz $\omega_c$ erzeugt werden, und/oder
**dass** in Schritt ii) frequenzabhängige $\omega_m$-Seitenbänder, vorzugsweise mit der Frequenz $11 \pm \omega_c \pm \omega_m$ für jedes $\omega_c$-Seitenband $\Omega \pm \omega_c$ entsprechend der Modulationsfrequenz $\omega_m$ und/oder dem Modulationsindex $\beta$ erzeugt werden.

6. Verfahren nach einem der Ansprüche 1 bis 5,
**dadurch gekennzeichnet,**
**dass** die Trägerfrequenz $\omega_c$ abstimmbar ist, um das Interferometer abzustimmen.

7. Verfahren nach einem der Ansprüche 1 bis 6,
**dadurch gekennzeichnet,**
**dass** in Schritt iii) der modulierte Laserstrahl durch die zwei oder mehr Arme des Interferometers geführt wird.

8. Verfahren nach einem der Ansprüche 1 bis 7,
**dadurch gekennzeichnet,**
**dass** in Schritt v) das Fehlersignal ein lineares Signal umfasst, das nur zu der Phasenänderung $\Delta\phi$ im Interferometer proportional ist.

9. Verfahren nach einem der Ansprüche 1 bis 8,
**dadurch gekennzeichnet,**

**dass** in Schritt vi) die Stabilisierung des Interferometers durch die Phasenbeziehung zwischen der Modulationsfrequenz $\omega_m$ und dem detektierten Signal hinter dem Interferometer realisiert wird, und/oder
**dass** in Schritt vi) die Abstimmung des Interferometers durch Abstimmung der Trägerfrequenz $\omega_c$ erfolgt, was vorzugsweise zu einer Verschiebung der $\omega_m$-Seitenbänder führt, während die Modulationsfrequenz $\omega_m$ unverändert bleibt.

10. Verfahren nach einem der Ansprüche 1 bis 9,
**dadurch gekennzeichnet,**
**dass** das Modulationssignal frequenzabhängige $\omega_{ci}$-Seitenbänder entsprechend den Trägerfrequenzen $\omega_{ci}$ und frequenzabhängige $\omega_m$-Seitenbänder entsprechend den Modulationsfrequenzen $\omega_{mi}$ erzeugt.

11. Verfahren nach einem der Ansprüche 1 bis 10,
**dadurch gekennzeichnet,**

**dass** jede Modulationsfrequenz $\omega_{mi}$ in einem eigenen Wellenformgenerator erzeugt wird, und/oder
**dass** die Demodulation des detektierten Signals für jede Modulationsfrequenz $\omega_{mi}$ in einem separaten Mischer realisiert wird.

12. System (1) zur Phasenabstimmung und Phasenstabilisierung von zwei oder mehreren Interferometern (2), vorzugsweise Interferometern, die für die Messung der Energie-Zeit-Verschränkung verwendet werden, wobei das System umfasst:

einen Laser (7), einen Phasenmodulator (8), Interferometer (2), mindestens einen Detektor (12), eine Modulationselektronik (4, 5, 6) und eine Demodulationselektronik (14, 15),
wobei der Laser so konfiguriert ist, dass er einen Laserstrahl erzeugt, der zum Phasenmodulator geleitet wird, und wobei die Modulationselektronik so konfiguriert ist, dass sie ein elektronisches Modulationssignal erzeugt und der Phasenmodulator mit dem elektronischen Modulationssignal gespeist wird, um den Laserstrahl zu modulieren, und

wobei der modulierte Laserstrahl durch die Interferometer geführt und hinter den Interferometern von dem Detektor oder den Detektoren detektiert wird, und

wobei die Demodulationselektronik so konfiguriert ist, dass sie ein Fehlersignal für jedes Interferometer erzeugt, das als Rückkopplung zu einem jeweiligen beweglichen Element (11) jedes Interferometers verwendet wird,

**dadurch gekennzeichnet,**

**dass** der Phasenmodulator außerhalb der Interferometer angeordnet ist, und

die zwei oder mehreren Interferometer Mach-Zehnder-Interferometer und/oder Michelson-Interferometer sind.

13. System nach Anspruch 12,
**dadurch gekennzeichnet,**

**dass** eines der Interferometer ein symmetrisches oder ein asymmetrisches Mach-Zehnder-Interferometer ist, und/oder

eines der Interferometer ist ein symmetrisches oder ein asymmetrisches Michelson-Interferometer ist.

14. Verfahren nach Anspruch 12 oder 13,
**dadurch gekennzeichnet,**

**dass** die zwei oder mehreren Interferometer miteinander verbunden und/oder räumlich getrennt sind.

## Revendications

1. Méthode d'accord et de stabilisation de phase de multiples interféromètres (2), de préférence des interféromètres utilisés pour la mesure de l'intrication énergie-temps, dans laquelle la méthode comprend :

   i) la génération d'un signal de modulation électronique;

   ii) la modulation de phase d'un faisceau laser par un modulateur de phase (8) et le signal de modulation électronique;

   iii) faire passer le faisceau laser modulé à travers les interféromètres, les interféromètres étant des interféromètres de Mach-Zehnder et/ou des interféromètres de Michelson;

   iv) détection du faisceau laser modulé par au moins un détecteur (12);

   v) la démodulation du signal détecté ou des signaux détectés afin de générer un signal d'erreur pour chaque interféromètre;

   vi) l'accord et/ou la stabilisation des interféromètres par une rétroaction du signal d'erreur respectif sur un élément mobile respectif de chaque interféromètre,

   **caractérisé en ce que**

   le signal de modulation électronique à l'étape i) comprend une fréquence porteuse $\omega_c$ et une fréquence de modulation $\omega_m$, et

   la modulation à l'étape ii) génère des bandes latérales dépendant de la fréquence, de préférence des bandes latérales $\omega_c$ correspondant à la fréquence porteuse $\omega_c$ et des bandes latérales $\omega_m$ correspondant à la fréquence de modulation $\omega_m$, et

   la démodulation du signal détecté ou des signaux détectés à l'étape v) est réalisée en mélangeant le ou les signaux détectés avec un signal en phase et à la fréquence de la fréquence de modulation $\omega_m$, et

   le signal de modulation comprend pour chaque interféromètre $i$ une fréquence porteuse $\omega_{ci}$ et/ou une fréquence de modulation $\omega_{mi}$, et

   une fréquence de modulation individuelle $\omega_{mi}$ est utilisée pour chaque interféromètre $i$, et/ou une fréquence porteuse individuelle $\omega_{ci}$ pour chaque interféromètre $i$ est modulée par une fréquence de modulation individuelle $\omega_{mi}$

2. Méthode selon la revendication 1,
   **caractérisé en ce que**
   le signal électronique de modulation est la fréquence de modulation $\omega_m$ modulée autour de la fréquence porteuse $\omega_c$, de préférence par l'utilisation d'un balayage linéaire.

3. Méthode selon la revendication 1 ou 2,
   **caractérisé en ce que**

à l'étape ii), le signal de modulation électronique est introduit dans le modulateur de phase de sorte que le spectre électronique du signal de modulation électronique soit converti en un spectre optique afin de générer le faisceau laser modulé.

4. Méthode selon l'une des revendications 1 à 3,
**caractérisé en ce que**
à l'étape ii), le modulateur de phase est piloté par le signal de modulation électronique afin de moduler la phase du faisceau laser.

5. Méthode selon l'une des revendications 1 à 4,
**caractérisé en ce que**

à l'étape ii), des bandes latérales $\omega_c$ dépendant de la fréquence, de préférence avec la fréquence $\Omega \pm \omega_c$, sont générées en fonction de la fréquence porteuse $\omega_c$, et/ou
à l'étape ii), des $\omega_m$ bandes latérales dépendant de la fréquence, de préférence avec la fréquence $\Omega \pm \omega_c \pm \omega_m$ pour chaque $\omega_c$ bande latérale $\Omega \pm \omega_c$, sont générées en fonction de la fréquence de modulation $\omega_m$ et/ou de l'indice de modulation $\beta$.

6. Méthode selon l'une des revendications 1 à 5,
**caractérisé en ce que**
la fréquence porteuse $\omega_c$ est accordable afin d'accorder l'interféromètre.

7. Méthode selon l'une des revendications 1 à 6,
**caractérisé en ce que**
à l'étape iii), le faisceau laser modulé est guidé à travers les deux bras ou plus de l'interféromètre.

8. Méthode selon l'une des revendications 1 à 7,
**caractérisé en ce que**
à l'étape v), le signal d'erreur comprend un signal linéaire proportionnel uniquement au changement de phase $\Delta\phi$ dans l'interféromètre.

9. Méthode selon l'une des revendications 1 à 8,
**caractérisé en ce que**

à l'étape vi), la stabilisation de l'interféromètre est réalisée par la relation de phase entre la fréquence de modulation $\omega_m$ et le signal détecté derrière l'interféromètre, et/ou
à l'étape vi), l'accord de l'interféromètre est réalisé en accordant la fréquence porteuse $\omega_c$, ce qui conduit de préférence à un décalage des bandes latérales $\omega_m$ alors que la fréquence de modulation $\omega_m$ reste inchangée.

10. Méthode selon l'une des revendications 1 à 9,
**caractérisé en ce que**
le signal de modulation génère des bandes latérales $\omega_{ci}$ dépendant de la fréquence correspondant aux fréquences porteuses $\omega_{ci}$ et des bandes latérales $\omega_m$ dépendant de la fréquence correspondant aux fréquences de modulation $\omega_{mi}$.

11. Méthode selon l'une des revendications 1 à 10,
**caractérisé en ce que**

chaque fréquence de modulation $\omega_{mi}$ est générée dans un générateur de forme d'onde individuel, et/ou
la démodulation du signal détecté est réalisée pour chaque fréquence de modulation $\omega_{mi}$ dans un mélangeur séparé.

12. Système (1) pour l'accord et la stabilisation de la phase de deux ou plusieurs interféromètres (2), de préférence des interféromètres utilisés pour la mesure de l'enchevêtrement énergie-temps, le système comprenant :

un laser (7), un modulateur de phase (8), des interféromètres (2), au moins un détecteur (12), une électronique de modulation (4, 5, 6) et une électronique de démodulation (14, 15),
dans lequel le laser est configuré pour générer un faisceau laser qui est guidé vers le modulateur de phase, et

dans lequel l'électronique de modulation est configurée pour générer un signal de modulation électronique et le modulateur de phase est alimenté par le signal de modulation électronique afin de moduler le faisceau laser, et dans lequel le faisceau laser modulé est guidé à travers les interféromètres et est détecté derrière les interféromètres par le détecteur ou les détecteurs, et dans lequel l'électronique de démodulation est configurée pour générer un signal d'erreur pour chaque interféromètre utilisé comme rétroaction à un élément mobile respectif (11) de chaque interféromètre, **caractérisé en ce que** le modulateur de phase est disposé à l'extérieur des interféromètres, et les deux interféromètres ou plus sont des interféromètres de Mach-Zehnder et/ou des interféromètres de Michelson.

**13.** Système selon la revendication 12,
**caractérisé en ce que**

l'un des interféromètres est un interféromètre de Mach-Zehnder équilibré ou non équilibré, et/ou l'un des interféromètres est un interféromètre de Michelson équilibré ou non équilibré.

**14.** Système selon la revendication 12 ou 13,
**caractérisé en ce que**
les deux interféromètres ou plus sont interconnectés et/ou séparés dans l'espace.

**Fig. 1**

EP 4 123 257 B1

Fig. 2

**Fig. 3**

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROGERS.** *High visibility time-energy entangled photons from a silicon nanophotonic chip*